# EUROPEAN PATENT APPLICATION

(11) **EP 2 372 578 A1**
(43) Date of publication of application: **05.10.2011**
(21) Application number: 10305247.8
(22) Date of filing: 12.03.2010
(51) Int. Cl.: G06F 17/30, H04N 7/14, H04N 7/15

(54) **Method for automatically tagging media content, media server and application server for realizing such a method**

(71) Applicant: Alcatel Lucent, 75008 Paris (FR)
(72) Inventor: Osmond, Marin, F - 35690 Acigne (FR); Saada, Stéphane, F - 35740 Pace (FR)
(74) Representative: ALU Antw Patent Attorneys

(57) **Abstract**

Method for automatically tagging media content that includes the steps of a media server obtaining capture tagging information from that media content upon capturing thereof and sending the capture tagging information and said media content to an application server. The application server tagging the media content with tagging information comprising at least part of the capture tagging information.

## Description

The invention relates to a method for automatically tagging media content.

Known media management systems such as User Generated Content applications or collaborative tools make extensive use of tags, also called metadata, to describe the medias. These tags allow for later search or reference amongst a large amount of contents. They are added either manually, or by automated tagging engines using information or metadata available at the level of the tagging engine, such as f.i. titles of movies, names of authors a.s.o..

However, some information that could be used for tagging may originate from the media capture process itself, especially in interactive environments. For example, in a videoconference such information could be f.i. which conferee is speaking at a given time or what are the user interactions used. This information is only visible from the media capture that is generally handled by media servers and is not available at the level of a tagging engine.

It is an object of the invention to overcome this drawback.

The method according to the invention realizes this object in that it is a method for automatically tagging media content said method including the steps of a media server obtaining capture tagging information from said media content upon capturing thereof and sending said capture tagging information and said media content to an application server, said application server tagging said media content with tagging information comprising at least part of said capture tagging information.

In this way, the information that is only available from the captured media information upon capturing of this data by the media server is made available to the application server, where the tagging engine resides, for tagging of the media data.

An additional feature of an embodiment of the method according to the invention is that said application server in addition obtains complementary tagging information from an external source and includes said complementary tagging information in said tagging information. Such complementary tagging information can for instance, in the case the media data is a movie, be the title of the movie or the names of the actors as mentioned earlier.

Another additional feature of an embodiment of the method according to the invention is that said media server obtains said capture tagging information under control of said application server. In this way the cappturing of the tagging information is made interactive.

The invention also relates to a media server for realizing the above method, said media server including media content capturing means adapted to capture media content, characterized in that said media server additionally includes processing means adapted to obtain capture tagging information from said media content upon capturing thereof and sending means to send said capture tagging information and said media content to an application server.

An additional feature of an embodiment of the media server according to the invention is that said media server is part of a videoconference system and that said content capturing means is adapted to record and mix audio and video flows of a videoconference, said processing means being adapted to obtain as said capture tagging information, information related to actions performed by at least one participant of said videoconference.

In this environment the capture tagging information can for instance be who is speaking at a given time or what keyboard keys are pressed by whom.

Another additional feature of an embodiment of the media server according to the invention is that it additionally includes receiving means adapted to receive control information, said processing means being additionally adapted to obtain said capture tagging information based on said control information.

The invention also relates to an application server for realizing the above method, said application server including receiving means adapted to receive from a media server media content, characterized in that said receiving means are also adapted to receive from said media server capture tagging information, and that said application server additionally includes tagging means adapted to tag said media content with tagging information that comprises at least part of said capture tagging information to obtain tagged media content.
A feature of an embodiment of the application server according to the invention is that said receiving means are additionally adapted to receive additional tagging information and that said application server also includes processing means to combine said capture tagging information with said additional tagging information to obtain said tagging information.

A additional feature of an embodiment of the application server according to the invention is that said application server is part of a videoconference system and that said capture tagging information is information related to actions performed by at least one participant of said videoconference. As mentioned above, in this environment the capture tagging information can for instance be who is speaking at a given time or what keyboard keys ar pressed by whom. The complementary tagging information can for instance be information on the geolocalization of conferees or on their presence status.

Embodiments of a method and of servers in accordance with embodiments of the present invention are hereafter described, by way of example only, and with reference to the accompanying figures where :
Figure 1 represents a videoconference system realizing an embodiment of the method; and
Figure 2 shows a system providing interactive services also realizing an embodiment of the method.

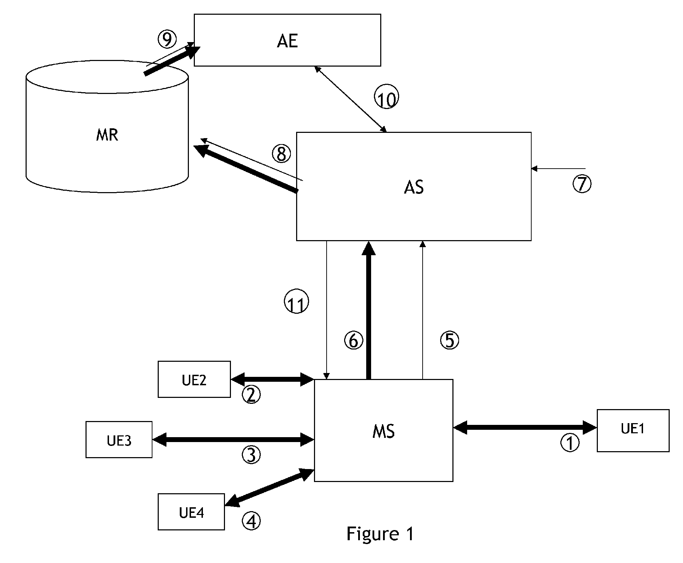

The videoconference system as shown in figure 1 consists of a media server MS connected to an application server AS via a network (not show). AS makes use of a media repository MR that can be co-located with AS or can be accessible via the network. MR provides data to an application entity AE also connected to the network (not shown).

AE controls AS over that network and can be accessed by user entities UE1, UE2, UE3 and UE4 via which participants (not shown) have access to the video conference (Figure 1 : arrows 1-4).

In alternative embodiments (not shown) the user entities directly control the application server or, the application server or the application entity are controlled by a third party that is not necessarily a participant to the conference.

MS mixes the audio and video flows and performs the conference "floor management", such as selecting which speaker has to be seen. How a video conference is realized and managed is not described in detail since this is not the subject of the invention. More details thereon can f.i. be found on http://www.rfc-editor.org/rfc/rfc4722.txt (chapter 5).

Upon request from AE (Figure 1 : arrow 10) via AS the videoconference is recorded by MS. This can for instance be requested by one of the participants to make meeting minutes or to keep a legal trace of who said what.

Under control of AS (Figure 1 : arrow 11) MS collects information proper to the media being recorded such as who speaks at a given time, which keyboard keys were pressed by whom a.s.o. F.i. if AS instructs MS to give the floor to the loudest speaker, MS will detect who is this loudest speaker and will record this information as tagging information to be sent to AS

The thus obtained information is sent to AS together with the recorded media (arrows 4 and 6). This can be done on-the-fly or MS can collect all data and send a complete file to AS after the video conference. AS then forwards the data to MR for storage (Figure 1 : arrow 8).
This is done using existing protocols such as MSCML, HTML,FTP...

AS also receives metadata from an external source (not shown) such as f.i. from a geolocalization server or a User Profile HSS (Figure 1 : arrow 7).

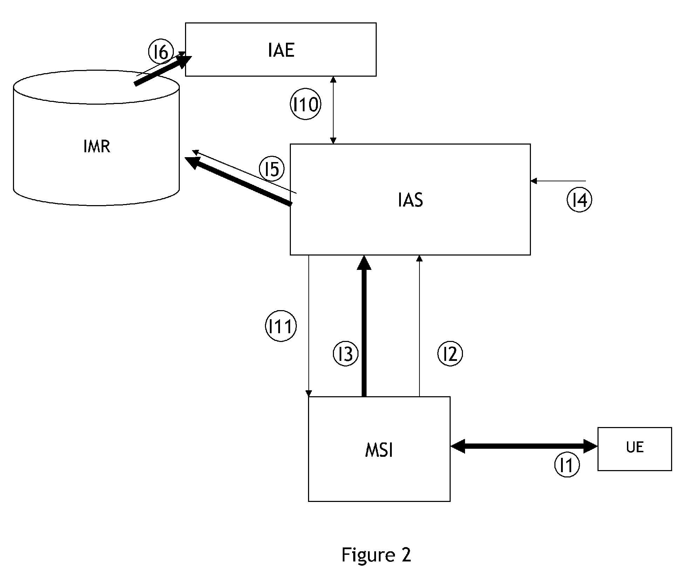

Figure 2 represents an interactive application entity IAE the behaviour of which is driven by picture recognition. In an alternative such an application can f.i. also be driven by speech recognition or by object recognition.

Tagging information related to the recognized picture such as picture size and position in a camera field, is obtained by a media server MSI when recording the picture as provided by a user entity UE, being a camera, via interface I1. This tagging information is together with the picture communicated to an application server IAS via 12 and 13 interfaces. IAS tags the picture with the obtained information and possibly with additional information obtained externally (arrow 14 in Figure 2) and stores the tagged picture in a repository IMR (over 15 as shown in Figure 2).

The capturing by MSI is controlled by AS (Figure 2 : arrow I11). This control is triggered by UE either directly or in an alternative via IAE.

It has to be remarked that the above described functions may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included.

Also, the above description and drawing merely illustrate the principles of the invention. It will thus be appreciated that, based on this description, those skilled in the art will be able to devise various arrangements that, although not explicitly described or shown herein, embody the principles of the invention and are included within its spirit and scope. Furthermore, the examples recited herein are principally intended expressly to be only for pedagogical purposes to aid the reader in understanding the principles of the invention and the concepts contributed by the inventor(s) to furthering the art, and are to be construed as being without limitation to such specifically recited example and conditions. Moreover, all statements herein reciting principles, aspects, and embodiments of the invention, as well as specific example thereof, are intended to encompass equivalents thereof.

## Claims

1. Method for automatically tagging media content said method including the steps of a media server (MS ; IMS) obtaining capture tagging information from said media content upon capturing thereof and sending said capture tagging information and said media content to an application server (AS ; IAS), said application server tagging said media content with tagging information comprising at least part of said capture tagging information.

2. Method according to claim 1, **characterized in that** said application server (AS ; IAS) in addition obtains complementary tagging information from an external source and includes said complementary tagging information in said tagging information.

3. Method according to claim 1, **characterized in that** said media server (MS ; IMS) obtains said capture tagging information under control of said application server.

4. Media server (MS ; IMS) for realizing a method according to claim 1, said media server including media content capturing means adapted to capture media content, **characterized in that** said media server additionally includes processing means adapted to obtain capture tagging information from said media content upon capturing thereof and sending means to send said capture tagging information and said media content to an application server.

5. Media server (MS) according to claim 4, **characterized in that** said media server is part of a videoconference system and that said content capturing means is adapted to record and mix audio and video flows of a videoconference, said processing means being adapted to obtain as said capture tagging information, information related to actions performed by at least one participant of said videoconference.

6. Media server (MS ; IMS) according to claim 4, **characterized in that** it additionally includes receiving means adapted to receive control information, said processing means being additionally adapted to obtain said capture tagging information based on said control information.

7. Application server (AS ; IAS) for realizing a method according to claim 1 or claim 2, said application server including receiving means adapted to receive from a media server (MS ; IMS) media content, **characterized in that** said receiving means are also adapted to receive from said media server (capture tagging information, and that said application server additionally includes tagging means adapted to tag said media content with tagging information that comprises at least part of said capture tagging information to obtain tagged media content.

8. Application server (AS ; IAS) according to claim 7, **characterized in that** said receiving means are additionally adapted to receive additional tagging information and that said application server also includes processing means to combine said capture tagging information with said additional tagging information to obtain said tagging information.

9. Application server (AS) according to claim 7 or claim 8, **characterized in that** said application server is part of a videoconference system and that said capture tagging information is information related to actions performed by at least one participant of said videoconference.
